# EUROPEAN PATENT APPLICATION

(11) **EP 4 679 554 A2**
(43) Date of publication of application: **14.01.2026**
(21) Application number: 25176952.7
(22) Date of filing: 16.05.2025
(51) Int. Cl.: H01M 10/0567, H01M 10/0568, H01M 10/0569

(54) **LITHIUM ION SECONDARY BATTERY ELECTROLYTE AND APPLICATION THEREOF**

(30) Priority: 08.07.2024 CN 202410909975
(71) Applicant: AESC Japan Ltd., Yokohama-Shi, Kanagawa 220-0012 (JP)
(72) Inventor: YU, Le, Pudong New Area Shanghai, 201315 (CN); WANG, Ziyuan, Pudong New Area Shanghai, 201315 (CN)
(74) Representative: Becker, Eberhard

(57) **Abstract**

A lithium ion secondary battery electrolyte and an application thereof are provided. The electrolyte includes a non-aqueous solvent, a lithium salt, and an additive including a compound represented by any one of Formulas (I)-(III): 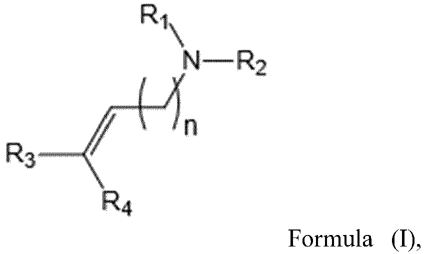 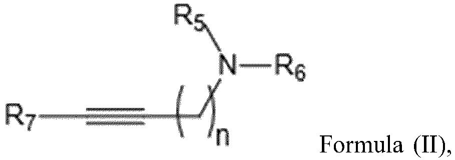 or 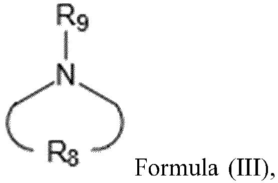 where R₁, R₂, R₃, R₄, R₅, R₆, and R₇ are each substituents with 1-3 carbon atoms, 0-3 heteroatoms, and unsaturation of 0-4, R₈ is a cyclic substituent with unsaturation of 0-4, and with 0-5 heteroatoms, R₉ is vinyl, allyl, butenyl, 1,3-butadienyl, ethynyl, propynyl when the unsaturation of R₈ is 0, the R₉ substituent does not exist when the unsaturation of R₈ is 1-4, the heteroatoms are selected from at least one of nitrogen, fluorine, and oxygen, and n is 0-2. The lithium ion secondary battery electrolyte and the application may prevent the dissolution of transition metal ions on the positive electrode, improve initial kinetics and gas generation issues, and enhance performance.

## Description

### BACKGROUND

### Technical Field

The disclosure relates to a field of power battery technology, and in particular to a lithium ion secondary battery electrolyte and an application thereof.

### Description of Related Art

With the growing demand for electric vehicles and portable devices, the development of lithium ion secondary batteries is constantly evolving. In commercial lithium ion secondary batteries, positive electrode materials account for more than 50% of the total mass and cost, which becomes a key factor in determining the energy density and cost of lithium ion secondary batteries.

In numerous positive electrode materials, high-nickel positive electrode materials have the potential to achieve high energy density, are well-developed, and also have considerable cycle life. However, due to issues such as decomposition reactions of lithium-related compounds in the battery, side reactions between the shell and the acidic environment of the system, oxidation reactions between the electrolyte and high-nickel positive electrode, or dissolution of transition metal ions from the positive electrode material, the high-nickel positive electrode materials exhibit serious gas generation phenomena. The accumulation of gas may lead to battery swelling, mechanical failure of the battery casing, or even battery explosion, thus posing certain safety performance risks. To solve the high-temperature gas generation of the high-nickel positive electrode materials, methods such as material coating, addition of positive electrode film-forming additives, transition metal ion trapping agents, or stabilizers are mainly adopted, but there are issues with energy density, initial power, and poor effectiveness for the battery system.

### SUMMARY

The disclosure provides a lithium ion secondary battery electrolyte and an application thereof. The lithium ion secondary battery electrolyte and the application provided by the disclosure may prevent dissolution of transition metal ions on a positive electrode side, and prevent internal short circuits caused by the reduction of transition metal ions diffusing to the negative electrode. Also, initial kinetics is improved, H⁺ generated in the system is neutralized, a gas generation problem of the lithium ion secondary battery is improved, and performance of the lithium ion secondary battery is enhanced.

To solve the aforementioned technical problems, the disclosure provides a lithium ion secondary battery electrolyte including following components: a non-aqueous solvent, a lithium salt, and an additive. The additive includes a compound represented by any one of Formulas (I) to (III): 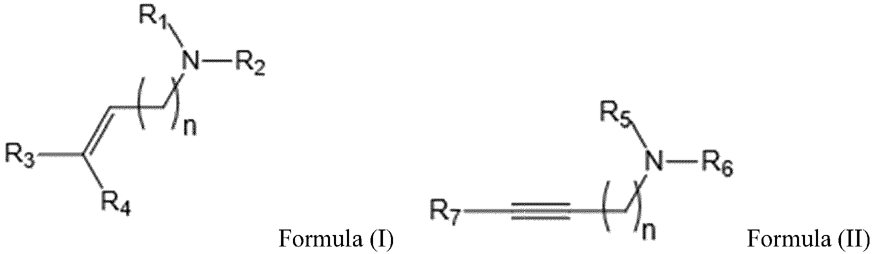 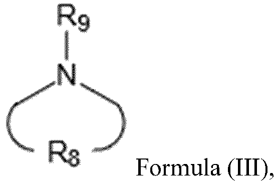 R₁, R₂, R₃, and R₄ are each substituents with 1 to 3 carbon atoms, 0 to 3 heteroatoms, and unsaturation of 0 to 4, R₅, R₆, and R₇ are each substituents with 1 to 3 carbon atoms, 0 to 3 heteroatoms, and unsaturation of 0 to 4, R₈ is a cyclic substituent with unsaturation of 0-4 and with 0 to 5 heteroatoms. When the unsaturation of R₈ is 0, R₉ is vinyl group, allyl group, butenyl group, 1,3-butadienyl group, ethynyl group, or propynyl group. When the unsaturation of R₈ is 1 to 4, the substituent R₉ does not exist. The heteroatoms are selected from at least one of nitrogen, fluorine, and oxygen, and n is 0-2.

In an embodiment of the disclosure, R₁, R₂, R₃, and R₄ are each alkyl group, alkenyl group, alkynyl group, carbonyl group, ester group, or amino group, and R₅, R₆, and R₇ are each alkyl group, alkenyl group, alkynyl group, or amino group.

In an embodiment of the disclosure, a content of the additive in the electrolyte is 0.05wt% to 3wt%.

In an embodiment of the disclosure, the content of the additive in the electrolyte is 0.1wt% to 0.5wt%.

In an embodiment of the disclosure, the additive is selected from at least one of following compounds:

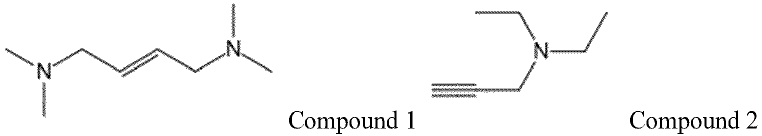

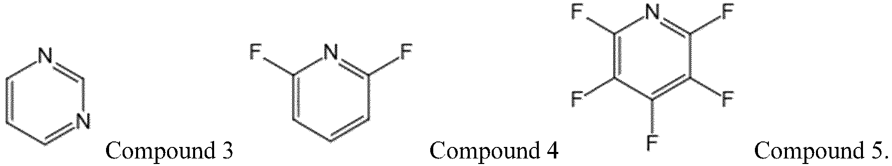

In an embodiment of the disclosure, the non-aqueous solvent is selected from at least one of carbonate ester, carboxylic ester, ether, or nitrile. The carbonate ester is selected from at least one of ethylene carbonate, propylene carbonate, dimethyl carbonate, ethyl methyl carbonate, diethyl carbonate, or fluoroethylene carbonate. The carboxylic ester is selected from at least one of ethyl formate, ethyl acetate, n-propyl acetate, or ethyl propionate. The ether is selected from at least one of 1,2-dimethoxyethane or ethylene glycol diethyl ether. The nitrile is selected from at least one of acetonitrile, propionitrile, butyronitrile or valeronitrile. A content of the non-aqueous solvent in the electrolyte is 70wt% to 85wt%.

In an embodiment of the disclosure, the lithium salt is selected from at least one of lithium hexafluorophosphate, lithium bis(fluorosulfonyl)imide, lithium bis(trifluoromethylsulfonyl)imide, lithium acetate, lithium methanesulfonate, and lithium trifluoromethanesulfonate. A content of the lithium salt in the electrolyte is 12wt% to 16wt%.

The disclosure further provides a lithium ion secondary battery at least including a positive electrode sheet, a negative electrode sheet, and an electrolyte. The electrolyte is selected from the lithium ion secondary battery electrolyte described above.

In an embodiment of the disclosure, a positive electrode active material on the positive electrode sheet includes Liₓ[Ni_{y}Co_{z}MnₜM_{(1-y-z-t})]O_{2-δ}), where M is at least one of Cr, Zr, Ca, Mg, Cu, Ti, Al, Mo, W, or Zn, 0.9<x<1.1, 0.65≤y<1.0, 0≤z<0.5, 0≤t<0.5, and 0≤δ≤0.1. A negative electrode active material on the negative electrode sheet includes at least one of graphite, a silicon oxide material, or a silicon carbon material.

The disclosure further provides an electrochemical equipment including the lithium ion secondary battery described above.

In summary, the disclosure provides the lithium ion secondary battery electrolyte and the application, which may introduce unsaturated functional groups with a good lithium ion conduction ability on the positive electrode side. After adsorption, the ability of nitrogen atoms with lone pair electrons is used to complex with empty d-orbitals of transition metal ions to capture potentially escaping transition metal ions, prevent dissolution of transition metal ions from the positive electrode side, and prevent internal short circuits caused by reduction of transition metal ions diffusing to the negative electrode. Thus, the safety performance of the battery is enhanced. At the same time, initial kinetics is improved, the positive electrode collapse caused by transition metal ion leakage is avoided, and H⁺ generated in the system is neutralized. Thereby, the content of HF is reduced, and the gas generation issue, the performance, and the usage safety of the lithium ion secondary battery are improved.

### DESCRIPTION OF THE EMBODIMENTS

The implementation of the disclosure is illustrated through specific embodiments below, and those skilled in the art may easily understand other advantages and effects of the disclosure from the content disclosed in this specification. The disclosure may also be implemented or applied through other different specific embodiments, and various modifications or changes may be made to the details in this specification based on different perspectives and applications, without departing from the spirit of the disclosure.

It should be understood that the disclosure may be implemented in different forms and should not be construed as limited to the embodiments presented here. On the contrary, providing these embodiments may make the disclosure thorough and complete, and fully convey the scope of the disclosure to those skilled in the art.

The technical solution of the disclosure is further detailed in combination with embodiments below. Obviously, the described embodiments are only part of the embodiments of the disclosure, not all embodiments. Based on the embodiments in the disclosure, all other embodiments obtained by those ordinary skilled in the art without creation are within the protection scope of the disclosure.

The disclosure provides a lithium ion secondary battery. The lithium ion secondary battery is, for example, a primary battery or a secondary battery. The secondary battery further exemplifies a pouch battery, a prismatic battery, or a cylindrical battery. The disclosure does not specifically limit a type of lithium ion secondary battery. Here, a prismatic battery is taken as an example to describe the specific implementation of the disclosure. In an embodiment of the disclosure, the lithium ion secondary battery includes a shell and a naked electric core disposed in the shell. The naked electric core includes a positive electrode sheet, a separator, and a negative electrode sheet. The positive electrode sheet, the separator, and the negative electrode sheet stacked sequentially to ensure that any positive electrode sheet and negative electrode sheet have a separator disposed there between. The naked electric core is obtained through winding or stacking, and placed into the battery shell. Afterwards, an electrolyte is injected into the shell at once or in multiple times, so that the naked electric core is completely immersed in the electrolyte.

The positive electrode sheet includes a positive electrode current collector and a positive electrode active material layer coated on at least one side surface of the positive electrode current collector. The positive electrode current collector is, for example, foil formed after surface treatment of nickel, titanium, aluminum, silver, stainless steel, or carbon. Besides foil, the positive electrode current collector may further use any one or a combination of various forms such as film, mesh, porous, foam, or non-woven fabric. A thickness of the positive electrode current collector is, for example, 8µm to 15µm. In this embodiment, the positive electrode current collector is, for example, aluminum foil, and a thickness of the aluminum foil is, for example, 13µm.

The positive electrode material layer includes a positive electrode active material, an adhesive, and a conductive agent. The positive electrode active material may select nickel cobalt manganese ternary positive electrode active material. The positive electrode active material may be expressed by the following chemical formula: Liₓ[Ni_{y}Co_{z}MnₜM_{(1-y-z-t)}]O_{2-δ}, where M is selected from one or more of Cr, Zr, Ca, Mg, Cu, Ti, Al, Mo, W, or Zn, 0.9<x<1.1, 0.65≤y<1.0, 0≤z<0.5, 0≤t<0.5, and 0≤δ≤0.1. In the substance shown here, a proportion of nickel exceeding 0.9, compared with conventional ternary positive electrode active materials with a content of nickel less than 0.8, may further enhance energy density and cycle lifespan of the lithium ion secondary battery. The adhesive is selected from any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene propylene diene terpolymer (EPDM), polyhexafluoropropylene, and polymerized styrene butadiene rubber (SBR). The conductive agent is selected from any one or more of conductive carbon black (Super P), acetylene black, carbon nanotubes, and graphene. In the positive electrode material layer, a mass ratio of the positive electrode active material, the conductive agent, and the adhesive is, for example, (90-98):(1-5):(1-5).

In an embodiment of the disclosure, the positive electrode active material is, for example, LiNi_{0.9}Mn_{0.05}Co_{0.05}O₂. The adhesive is selected from PVDF. The conductive agent is selected from Super P. The positive electrode active material, the conductive agent, and the adhesive are mixed according to a mass ratio of 98:1:1, with an added organic solvent, and stirred in a vacuum mixer until the system becomes homogeneous, to obtain a positive electrode slurry. The organic solvent is selected from N-methylpyrrolidone (NMP). The positive electrode slurry is uniformly coated on the aluminum foil, then dried at room temperature before being transferred to an oven for drying, and after processes such as cold pressing and cutting, the positive electrode sheet is obtained. In other embodiments, the positive electrode sheet may also be obtained by any other method of forming a positive electrode sheet.

The negative electrode sheet includes a negative electrode current collector and at least one negative electrode material layer coated on one side surface of the negative electrode current collector. The negative electrode current collector is selected from one of copper foil current collector, composite copper foil current collector, carbon current collector, foam copper current collector, or stainless steel current collector. A thickness of the negative electrode current collector is, for example, 8µm to 15µm. In this embodiment, the negative electrode current collector selects copper foil, and a thickness of the copper foil is, for example, 13µm.

In an embodiment of the disclosure, the negative electrode material layer includes a negative electrode active material, a conductive agent, an adhesive, and a thickener. The negative electrode active material is a compound capable of intercalating-deintercalating lithium ions. In an embodiment of the disclosure, the negative electrode active material includes at least one of graphite, silicon oxide material (SiOₓ, 0<x<2), or silicon carbon material. When the negative electrode active material includes a silicon oxide material or a silicon carbon material, mass ratios of the silicon oxide material to graphite or the silicon carbon material to graphite are, for example, 5:95 to 10:90. The adhesive is selected from any one or more of PVDF, PEO, PA, polypropylene, polyacrylate, polyvinylether, PAMA, polyhexafluoropropylene, or SBR. The thickener is selected from carboxymethyl cellulose sodium (CMC-Na). The conductive agent is selected from any one or more of Super P, acetylene black, ketjen black, carbon nanotubes, and graphene. A mass ratio of the negative electrode active material, the conductive agent, the adhesive, and the thickener in the negative electrode material layer is, for example, (90-96):(1-2):(1-3):(2-5).

In an embodiment of the disclosure, the negative electrode active material is selected from graphite and a silicon carbon material, and a mass ratio of the silicon carbon material and the graphite is, for example, 6:94. The conductive agent is selected from Super P. The thickener is selected from CMC-Na. The adhesive may be selected from SBR. In an embodiment of the disclosure, the negative electrode active material, the conductive agent, the adhesive, the thickener are mixed according to a mass ratio of 96:1:1:2, with added deionized water, and stirred uniformly in the vacuum mixer to obtain a negative electrode slurry. The negative electrode slurry is coated on the copper foil, then dried at room temperature before being transferred to the oven for drying, and after the processes such as cold pressing and cutting, the negative electrode sheet is obtained. In other embodiments, the negative electrode sheet may also be obtained by any other method of forming a negative electrode sheet.

The separator is, for example, polyethylene (PE), polypropylene (PP), a glass fiber film, or a composite film, and a thickness of the separator is, for example, 9µm to 15µm.

The lithium ion secondary battery further includes the electrolyte injected and filled in the entire internal space of the battery. The positive electrode sheet, the separator, and the negative electrode sheet are completely immersed in the electrolyte which functions to conduct ions, provide ion channels, and maintain chemical stability. The various components in the electrolyte may be divided into a non-aqueous solvent, a lithium salt, and an additive according to their functions and addition amounts. The non-aqueous solvent is used to dissolve the lithium salt and the additive. The lithium salt is mainly used to provide the lithium ions to form the ion channels. In the entire electrochemical system of the battery, the lithium ions and electrons generates electricity in the directional movement. The lithium salt has a significant impact on the energy density, power density, wide electrochemical window, cycle lifespan, and safety performance of the lithium battery. The additives, as substances added in small amounts in the electrolyte, are of various types, and each of the additives serves different functions such as providing different improvement effects on the high and low temperature performance, cycling performance, and film-forming performance of the battery.

The disclosure provides a lithium ion secondary battery electrolyte including at least a non-aqueous solvent, a lithium salt, and an additive. The additive includes a compound expressed by any one of Formulas (I) to (III): 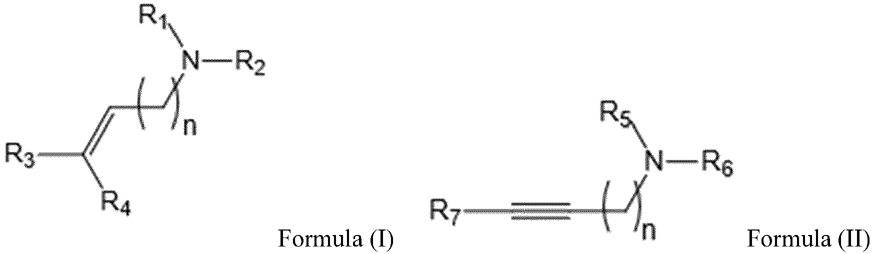 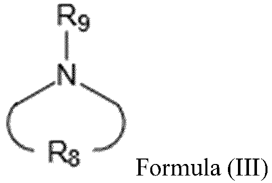 R₁, R₂, R₃, and R₄ are substituents with 1 to 3 carbon atoms, unsaturation of 0 to 4, and number of heteroatoms of 0 to 3. In an embodiment of the disclosure, R₁, R₂, R₃, and R₄ are alkyl group, alkenyl group, alkynyl group, carbonyl group, ester group, or amino group substituents, and R₅, R₆, and R₇ are substituents with 1 to 3 carbon atoms, unsaturation of 0 to 4, and number of heteroatoms of 0 to 3. In an embodiment of the disclosure, R₅, R₆, and R₇ are alkyl group, alkenyl group, alkynyl group, or amino group substituents, and R₈ is a cyclic substituent with unsaturation of 0 to 4, and number of heteroatoms of 0 to 5. When the unsaturation of R₈ is 0, R₉ is vinyl group, allyl group, butenyl group, 1,3-butadienyl group, ethynyl group, or propynyl group. When the unsaturation of R₈ is 1 to 4, the R₉ substituent does not exist. The heteroatoms included in Formulas (I)-(III) are selected from at least one of nitrogen, fluorine, or oxygen, and n in Formulas (I)-(II) is 0 to 2 respectively. In the fully charged state, the transition metal ions in the positive electrode have high activity. The positive electrode structure collapses after being attacked by H⁺, making the transition metal ions easily dissolved from the positive electrode. Unsaturated bonds and nitrogen atoms included in the additive may complex with nickel ions in the positive electrode and neutralize H+ in the system, enhancing the safety of the lithium ion secondary battery.

In an embodiment of the disclosure, the additive is selected from at least one of Compounds 1 to 5:

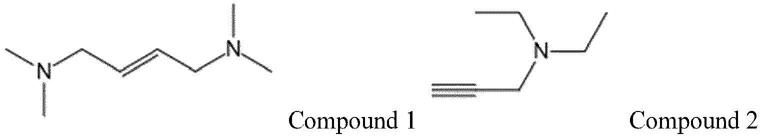

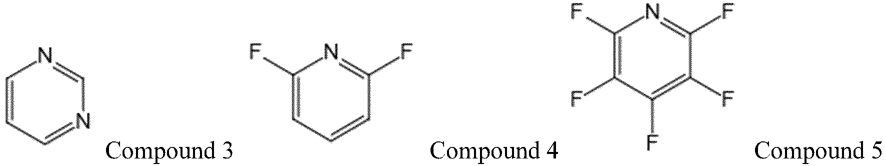

In an embodiment of the disclosure, a molecular weight of the additive is as less than or equal to 200. Through the additive provided by the disclosure, the unsaturated bonds in the additive makes the additive preferentially adsorb on the positive electrode side, introducing unsaturated functional groups with a good lithium ion conduction ability on the positive electrode side. After adsorption, the ability of the nitrogen atom's lone pair electrons is used to complex with the empty d-orbitals of transition metal ions to capture potentially escaping transition metal ions, prevent the dissolution of transition metal ions from the positive electrode side, and prevent internal short circuits caused by the reduction of transition metal ions diffusing to the negative electrode. Thus, the safety performance of the battery is enhanced. Also, the positive electrode collapse caused by transition metal ion leakage is avoided. At the same time, the nitrogen atoms with lone pair electrons in the additive may neutralize H⁺ generated in the system, reduce the content of HF, improve the gas generation issue, and enhance the performance of the lithium ion secondary battery.

In an embodiment of the disclosure, a content of the additive in the electrolyte is, for example, 0.05wt% to 3wt%, including endpoint values. When the content of the additive is too low, a neutralizing ability of the additive is insufficient to improve the performance of the lithium ion secondary battery. When the content of the additive is too high, excess additive easily acts as a nucleophilic attacking reagent and reacts with cyclic substances in the system, such as ethylene carbonate (EC) or fluoroethylene carbonate (FEC) in the non-aqueous solvent to cause ring-opening polymerization reactions, so that the non-aqueous solvent excessively consumes, and the kinetics and high-temperature performance of the battery deteriorate. In an embodiment of the disclosure, the content of the additive in the electrolyte is selected to be 0.1wt% to 0.5wt%. Within this range, the additive simultaneously enhances the battery's initial power, high-temperature storage gas generation, and open circuit voltage after storage performance. Therefore, controlling the content of the additive ensures the improvement of the comprehensive performance of the lithium ion secondary battery.

In an embodiment of the disclosure, the lithium salt is selected from at least one of lithium hexafluorophosphate (LiPF₆), lithium bis(fluorosulfonyl)imide (LiFSI), lithium bis(trifluoromethylsulfonyl)imide (LiTFSI), lithium acetate, lithium methanesulfonate, and lithium trifluoromethanesulfonate (CF₃SO₃Li). A content of the lithium salt in the electrolyte is, for example, 12wt% to 16wt%. In an embodiment of the disclosure, the lithium salt is selected from a mixture of LiPF₆ and LiFSI, and a mass ratio of the LiPF₆ to the LiFSI is, for example, 14:1 to 14:4.

In an embodiment of the disclosure, the non-aqueous solvent is selected from at least one of carbonate, carboxylate, ether, or nitrile. The carbonate is selected from at least one of EC, propylene carbonate (PC), dimethyl carbonate (DMC), ethyl methyl carbonate (EMC), diethyl carbonate (DEC), or FEC. The carboxylate is selected from at least one of ethyl formate (EF), ethyl acetate (EA), n-propyl acetate (PA), or ethyl propanoate (EP). The ether is selected from at least one of 1,2-dimethoxyethane (DME) or ethylene glycol diethyl ether. The nitrile is selected from at least one of acetonitrile (AN), propionitrile, butyronitrile (BN), or valeronitrile (VN). The content of the non-aqueous solvent in the electrolyte is, for example, 70wt% to 85wt%. In a specific embodiment of the disclosure, the non-aqueous solvent is, for example, a mixture of EC and EMC. In a specific embodiment of the disclosure, the non-aqueous solvent is, for example, a mixture of EC, EMC, and DMC. In a specific embodiment of the disclosure, the non-aqueous solvent is, for example, a mixture of EC, EMC, and DMC.

In an embodiment of the disclosure, when the electrolyte is prepared, in a glove box with stable gas such as nitrogen or argon has a content of 99.999%, where the actual oxygen content in the glove box is less than or equal to 0.1ppm, and the water content is less than or equal to 0.1ppm. After the non-aqueous solvent is mixed uniformly according to a mass ratio, the thoroughly dried lithium salt is incorporated into the aforementioned non-aqueous solvent, and the additive is added to prepare a non-aqueous electrolyte for the lithium ion secondary battery. Except for the non-aqueous solvent, the content of the lithium salt and the additive is a weight percentage calculated based on a total weight of the electrolyte.

In an embodiment of the disclosure, the positive electrode sheet, the separator, and the negative electrode sheet are stacked in sequence. The separator positioned between the positive electrode sheet and the negative electrode sheet functions as isolation. The naked electric core is obtained through winding or stacking. The naked electric core is placed into a casing, dried in a vacuum oven, filled with the electrolyte prepared according to the disclosure, and then sealed. After at least standing, formation, and capacity grading processes, a lithium ion secondary battery is obtained.

Hereinafter, the disclosure is explained more specifically through the embodiments, which should not be understood as limitation. Within the scope consistent with the spirit of the disclosure, appropriate modifications may be made, all of which fall within the technical scope of the disclosure.

### Example 1

Preparation of electrolyte: In an argon glove box with water content less than 0.1ppm and oxygen content less than 0.1ppm, EC, EMC, and DMC were mixed uniformly at a mass ratio of 3:5:2 to obtain a mixed solvent. Afterwards, the dried LiPF₆ and Compound 1 were added into the mixed solvent, and after mixing uniformly, the electrolyte was obtained. In the obtained electrolyte, the content of the lithium salt was 12wt%, and the content of the Compound 1 was 0.05wt%.

Preparation of positive electrode sheet: LiNi_{0.9}Mn_{0.05}Co_{0.05}O₂, PVDF, and Super P were mixed at a mass ratio of 98:1:1, with added N-methyl pyrrolidone, and stirred in the vacuum mixer until the whole became homogeneous, to obtain a positive electrode slurry. The positive electrode slurry was uniformly coated on the aluminum foil, then dried at room temperature before being transferred to the oven for drying, and after the processes such as cold pressing and cutting, the positive electrode sheet was obtained.

Preparation of negative electrode sheet: The negative electrode active material, Super P, CMC-Na, and SBR were mixed at a mass ratio of 96:1:1:2. The negative electrode active material was a mixture of the silicon carbon material and graphite, with a mass ratio of the silicon carbon material to graphite of 6:94. Deionized water was added into the mixture and mixed uniformly in the vacuum mixer to obtain a negative electrode slurry. The negative electrode slurry was coated on the copper foil, then dried at room temperature before being transferred to an oven for drying, and after processes such as cold pressing and cutting, the negative electrode sheet was obtained.

Selection of separator: 12µm PE was selected as a separator.

Preparation of battery: The positive electrode sheet, the separator, and negative electrode sheet were stacked in sequence. The separator positioned between the positive electrode sheet and negative electrode sheet functioned as isolation, and stacked to obtain a naked electric core. Then, the naked electric core was placed in the shell, dried in the vacuum oven, filled with the prepared electrolyte, and then sealed. Followed by formation of the electrolyte, a lithium ion secondary battery (hereinafter referred to as a battery) was obtained.

### Example 2

The additive was modified to Compound 2, with other steps maintaining consistency with Example 1.

### Example 3

The additive was modified to Compound 4, and a content of Compound 4 was 3wt%, with other steps maintaining consistency with Example 1.

### Example 4

The additive was modified to Compound 2, and a content of Compound 2 was 3wt%, with other steps maintaining consistency with Example 1.

### Example 5

The additive was modified to Compound 2, and a content of Compound 2 was 0.1wt%, with other steps maintaining consistency with Example 1.

### Example 6

The additive was modified to Compound 2, and a content of Compound 2 was 0.3wt%, with other steps maintaining consistency with Example 1.

### Example 7

The additive was modified to Compound 2, and a content of Compound 2 was 0.5wt%, with other steps maintaining consistency with Example 1.

### Example 8

The additive was modified to Compound 2, and a content of Compound 2 was 1wt%, with other operations maintaining consistency with Example 1.

### Comparative Example 1

No additive was incorporated, with other steps maintaining consistency with Example 1.

### Comparative Example 2

The additive was modified to Compound 2, and a content of Compound 2 was 5wt%, with other steps maintaining consistency with Example 1.

### Comparative Example 3

The additive was modified to the following Compound 6, and a content of Compound 6 was 0.3wt%, with other steps maintaining consistency with Example 1.

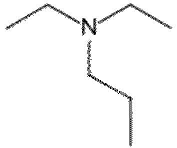

### Comparative Example 4

The additive was modified to the following Compound 7, and a content of Compound 7 was 0.3wt%, with other steps maintaining consistency with Example 1.

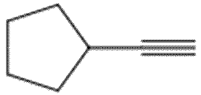

In the disclosure, the lithium ion secondary battery was prepared by using different ratios of the electrolyte as in the aforementioned Examples 1 to 8 and Comparative Examples 1 to 4, and the performance of each lithium ion secondary battery was tested as follows.

### Direct current resistance (DCR) test at beginning of life (BOL)

The specific test method for measuring DCR at the BOL state was in the following. After a temperature of the constant temperature box was adjusted to 25°C, the battery placed in the constant temperature box for 10 minutes was charged to 4.25V through the constant current at 0.33C, then charged until 0.05C at the constant voltage of 4.25V, rested for 30 minutes, then discharged to 2.5V through the constant current at 0.33C, and rested for 10 minutes. The aforementioned charge-discharge cycle was repeated twice, and the discharge capacity of the last cycle as C₀ was taken. Afterwards, the battery was charged to 4.25V through the constant current at 0.33C, then charged until 0.05C at the constant voltage, rested for 30 minutes, discharged to 50%C₀ through the constant current at 0.33C, and rested for 1 hour. The end voltage after rest as V₀ was recorded. Finally, the battery that has been discharged to 50%C₀ at 4C₀ was discharged through the constant current for 30 seconds. The voltage as V₁ at this time was recorded, and BOL DCR=(V₀-V₁)/4C₀.

### Storage gas generation test at 60°C and open circuit voltage test

The specific steps for the storage gas generation test at 60°C were in the following. After a temperature of the constant temperature box was adjusted to 25°C, the battery placed in the constant temperature box for 2 hours was charged to 4.25V through the constant current at 0.33C, then charged until 0.05C at the constant voltage, and rested for 30 minutes. The measured battery volume at this time was recorded as V₁, that is, V₁ is the battery volume in the fully charged state before storage. The same battery that obtained V₁ was discharged to 2.5V through the constant current at 0.33C, with the adjustment of the temperature of the constant temperature box to 60°C, rested for 30 minutes, charged to 4.25V through the constant current at 0.33C, and charged until 0.05C at the constant voltage. After storage for 2 months (denoted as 2 M in Table 1 below), the measured battery volume was recorded as V₂, and the gas volume expansion rate after 2 months of storage may be calculated as=(V₂-V₁)/V₁×100%. Moreover, simultaneously with the measurement of the battery volume, the measured voltage between the positive and negative electrodes of the battery was recorded as an open circuit voltage (OCV), thereby obtaining the OCV after 2 months of storage at 60°C.

**Table 1. Performance test results of a lithium ion secondary battery in Examples 1 to 8 and Comparative Examples 1 to 4**

| Group | Additive | Lithium salt | DCR at BOL (mOhm) | Gas generation storage for 2 M at 60°C (%) | OCV after 2M of storage at 60°C (V) |
|---|---|---|---|---|---|
| Example 1 | 0.05wt% of Compound 1 | 12wt% of LiPF₆ | 100.2 | 9.26% | 3.99 |
| Example 2 | 0.05wt% of Compound 2 | 12wt% of LiPF₆ | 96.3 | 8.51% | 4.02 |
| Example 3 | 3wt% of Compound 4 | 12wt% of LiPF₆ | 98.7 | 8.86% | 4.00 |
| Example 4 | 3wt% of Compound 2 | 12wt% of LiPF₆ | 96.6 | 8.62% | 4.01 |
| Example 5 | 0.1wt% of Compound 2 | 12wt% of LiPF₆ | 94.5 | 7.25% | 4.08 |
| Example 6 | 0.3wt% of Compound 2 | 12wt% of LiPF₆ | 92.1 | 7.08% | 4.13 |
| Example 7 | 0.5wt% of Compound 2 | 12wt% of LiPF₆ | 93.7 | 7.12% | 4.10 |
| Example 8 | 1wt% of Compound 2 | 12wt% of LiPF₆ | 95.4 | 8.56% | 4.05 |
| Comparative Example 1 | - | 12wt% of LiPF₆ | 110.6 | 45.58% | 2.37 |
| Comparative Example 2 | 5% of Compound 2 | 12wt% of LiPF₆ | 105.2 | 14.58% | 3.57 |
| Comparative Example 3 | 0.3% of Compound 6 | 12wt% of LiPF₆ | 108.7 | 24.33% | 2.99 |
| Comparative Example 4 | 0.3% of Compound 7 | 12wt% of LiPF₆ | 109.3 | 26.79% | 2.65 |

Referring to Table 1, and comparing Examples 1 to 8 with Comparative Example 1, it may be known that adding the additive of the disclosure into the electrolyte may improve the initial kinetics of the lithium ion battery, with significant improvements in the high-temperature storage gas generation and OCV after storage. Comparing Examples 1 to 4, it may be known that selecting different compounds conforming to the general formula of the disclosure as additives may improve the performance of the lithium ion battery. The reason is that when compounds conforming to the general formula of the disclosure containing both unsaturated bonds and nitrogen atoms are added to the electrolyte, the compounds may chelate transition metal ions from the positive electrode, neutralize H⁺ generated in the system, and enhance the battery's initial kinetics, high-temperature storage gas generation, OCV after storage, and other performance, but additives with different structures have different improvement effects on performance. As shown in Table 1, Compound 2 has the most significant improvement effect on the battery's initial kinetics without deterioration, high-temperature storage gas generation, and OCV after storage.

Referring to Table 1, and comparing Examples 2 and 5 to 8 and Comparative Example 2, when the content of the specific compound shown in the additive is within a range of 0.05wt% to 3wt%, the battery's initial kinetics and storage performance at the high temperature are both enhanced, and with the increase of the content of the additive, the DCR of the lithium ion battery first decreases and then increases, the high-temperature storage gas generation first decreases and then increases, and the storage OCV at the high temperature first increases and then decreases. Therefore, controlling the content of the additive may enable the comprehensive performance of the lithium ion battery to reach optimum. When the content of the additive exceeds 3wt%, a thicker SEI film may be formed on the negative electrode, which results in deterioration in the performance of the lithium ion battery.

Further, comparing Examples 1 to 8 with Comparative Examples 3 to 4, it may be known that when the compound in the additive only contains unsaturated bonds or only contains nitrogen atoms, the performance of the lithium ion battery is not significantly improved. The indication shows that only the additive containing compounds with specific structures that simultaneously have unsaturated bonds and nitrogen atoms may enhance the battery's initial kinetics, high-temperature storage gas generation, OCV after storage, and other performance.

The disclosure further provides an electrochemical equipment. The electrochemical equipment includes at least one of the aforementioned lithium ion secondary battery. The lithium ion secondary battery is used to provide electrical energy. The electronic device may be a vehicle, a mobile a phone, a portable device, a laptop computer, a ship, a spacecraft, an electric toy, and an electric tool. In an embodiment of the disclosure, the vehicle is, for example, a new energy vehicle. The new energy vehicle may be a pure electric vehicle, a hybrid vehicle, or a range-extended vehicle. The spacecraft includes an aircraft, a rocket, a space shuttle, and a spaceship. The electric toy includes stationary, or mobile electric toys such as a game console, an electric car toy, an electric ship toy, and an electric aircraft toy. The electric tool includes a metal cutting electric tool, a grinding electric tool, an assembly electric tool, and a railway electric tool such as an electric drill, an electric grinder, an electric wrench, an electric screwdriver, an electric hammer, an impact drill, a concrete vibrator, and an electric planer. The electronic device includes the aforementioned lithium ion secondary battery; therefore, the advantages of the aforementioned lithium ion secondary battery are included, and are not repeated here.

In summary, the disclosure provides the lithium ion secondary battery electrolyte and the application thereof. Adding the compounds with specific structures that simultaneously contain unsaturated bonds and nitrogen atoms into the electrolyte may introduce unsaturated functional groups with the good lithium ion conduction ability on the positive electrode side. After adsorption, the ability of nitrogen atoms with lone pair electrons is used to complex with the empty d-orbitals of transition metal ions to capture potentially escaping transition metal ions, prevent the dissolution of transition metal ions from the positive electrode side, and prevent internal short circuits caused by the reduction of transition metal ions diffusing to the negative electrode. Thus, the safety performance of the battery is enhanced. Also, initial kinetics is improved, and the positive electrode collapse caused by transition metal ion leakage is avoided. At the same time, the nitrogen atoms with lone pair electrons may neutralize H⁺ generated in the system, reduce the content of HF, improve the gas generation issue, and enhance the performance of the lithium ion secondary battery.

## Claims

1. A lithium ion secondary battery electrolyte, comprising at least following components:
a non-aqueous solvent;
a lithium salt; and
an additive, wherein the additive includes a compound represented by any one of Formula (I) to Formula (III): 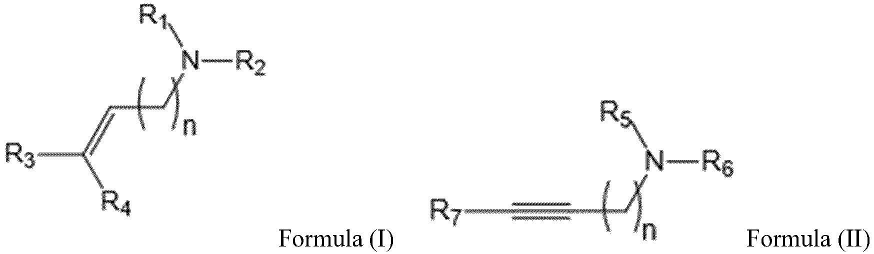 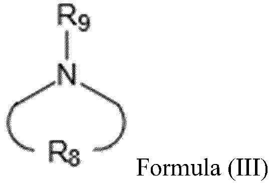
R₁, R₂, R₃, and R₄ are each substituents with 1 to 3 carbon atoms, 0 to 3 heteroatoms, and unsaturation of 0 to 4, R₅, R₆, and R₇ are each substituents with 1 to 3 carbon atoms, 0 to 3 heteroatoms, and unsaturation of 0 to 4, R₈ is a cyclic substituent with unsaturation of 0 to 4 and with 0 to 5 heteroatoms, R₉ is vinyl group, allyl group, butenyl group, 1,3-butadienyl group, ethynyl group, or propynyl group when the unsaturation of R₈ is 0, R₉ does not exist when the unsaturation of R₈ is 1 to 4, the heteroatoms are selected from at least one of nitrogen, fluorine, and oxygen, and n is 0 to 2.

2. The lithium ion secondary battery electrolyte according to claim 1, wherein R₁, R₂, R₃, and R₄ are each alkyl group, alkenyl group, alkynyl group, carbonyl group, ester group, or amino group, and R₅, R₆, and R₇ are each alkyl group, alkenyl group, alkynyl group, or amino group.

3. The lithium ion secondary battery electrolyte according to claim 1, wherein a content of the additive in the electrolyte is 0.05wt% to 3wt%.

4. The lithium ion secondary battery electrolyte according to claim 3, wherein the content of the additive in the electrolyte is 0.1wt% to 0.5wt%.

5. The lithium ion secondary battery electrolyte according to claim 1, wherein the additive is selected from at least one of following compounds:

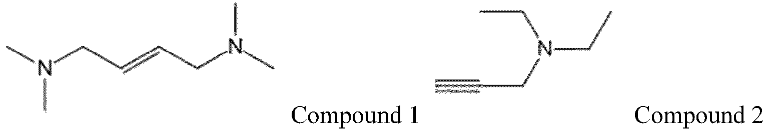

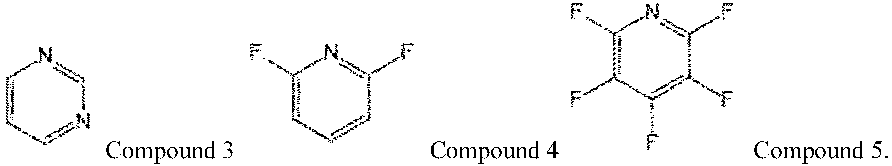

6. The lithium ion secondary battery electrolyte according to claim 1, wherein the non-aqueous solvent is selected from at least one of carbonate ester, carboxylic ester, ether, or nitrile, wherein the carbonate ester is selected from at least one of ethylene carbonate, propylene carbonate, dimethyl carbonate, ethyl methyl carbonate, diethyl carbonate, or fluoroethylene carbonate, the carboxylic ester is selected from at least one of ethyl formate, ethyl acetate, n-propyl acetate, or ethyl propanoate, the ether is selected from at least one of 1,2-dimethoxyethane or ethylene glycol diethyl ether, wherein the nitrile is selected from at least one of acetonitrile, propionitrile, butyronitrile, or valeronitrile, wherein a content of the non-aqueous solvent in the electrolyte is 70wt% to 85wt%.

7. The lithium ion secondary battery electrolyte according to claim 1, wherein the lithium salt is selected from at least one of lithium hexafluorophosphate, lithium bis(fluorosulfonyl)imide, lithium bis(trifluoromethylsulfonyl)imide, lithium acetate, lithium methanesulfonate, and lithium trifluoromethanesulfonate, and a content of the lithium salt in the electrolyte is 12wt% to 16wt%.

8. A lithium ion secondary battery, at least comprising:
a positive electrode sheet;
a negative electrode sheet; and
an electrolyte, wherein the electrolyte is selected from any one of the lithium ion secondary battery electrolyte according to claims 1 to 7.

9. The lithium ion secondary battery according to claim 8, wherein a positive electrode active material on the positive electrode sheet comprises Liₓ[Ni_{y}Co_{z}MnₜM_{(1-y-z-t)}]O_{2-δ}, M is at least one of Cr, Zr, Ca, Mg, Cu, Ti, Al, Mo, W, or Zn, 0.9<x<1.1, 0.65≤y<1.0, 0≤z<0.5, 0≤t<0.5, 0≤δ≤0.1, and a negative electrode active material on the negative electrode sheet comprises at least one of graphite, a silicon oxide material, or a silicon carbon material.

10. An electrochemical equipment, comprising the lithium ion secondary battery according to claims 8 or 9.
